# EUROPEAN PATENT APPLICATION

(11) **EP 1 942 355 A1**
(43) Date of publication of application: **09.07.2008**
(21) Application number: 06810391.0
(22) Date of filing: 21.09.2006
(51) Int. Cl.: G02B 5/28, G03H 1/26, G11B 7/24

(54) **FILTER FOR OPTICAL RECORDING MEDIUM, METHOD FOR MANUFACTURING SUCH OPTICAL RECORDING MEDIUM, OPTICAL RECORDING MEDIUM, METHOD FOR RECORDING IN SUCH OPTICAL RECORDING MEDIUM AND METHOD FOR REPRODUCING FROM SUCH OPTICAL RECORDING MEDIUM**

(30) Priority: 07.10.2005 JP 2005295667
(71) Applicant: FUJIFILM Corporation, Minato-ku Tokyo 106-8620 (JP)
(72) Inventor: KAMADA, Kou c/o Fujifilm Corporation, Ashigarakami-gun Kanagawa 258-8577 (JP); USUI, Makio, Saitama-shi, Saitama 331-9624 (JP)
(74) Representative: Grünecker, Kinkeldey, Stockmair & Schwanhäusser Anwaltssozietät
(86) International application number: PCT/JP2006/318731
(87) International publication number: WO 2007/043300

(57) **Abstract**

There is provided a filter for an optical recording medium, including: a plurality of high refractive index layers, and a plurality of low refractive index layers, wherein the high refractive index layers and the low refractive index layers are alternately deposited, the total number of the high refractive index layers and the low refractive index layers deposited is an even number in the range of 10 to 20, and the high refractive index layers and the low refractive index layers are different in thickness from one another. Also, there is provided an optical recording medium using the filter for an optical recording medium.

## Description

### Technical Field

The present invention relates to a filter for an optical recording medium, suitably used as a wavelength-selective reflection film in a hologram optical recording medium capable of high-density image recording; a method for producing the filter for an optical recording medium; an optical recording medium using the filter for an optical recording medium; and a recording method and a reproducing method for the optical recording medium.

### Background Art

Examples of recording media onto which large amounts of information such as high-density image data can be written include optical recording media. As to these optical recording media, although rewritable optical recording media such as magnetooptical discs and phase-change optical discs and write-once optical recording media such as CD-Rs have already been put to commercial use, there is a growing demand for further enlargement of optical recording media in capacity. However, all conventionally proposed optical recording media are based upon two-dimensional recording, which limits enlargement of recording capacity Accordingly, these days, hologram optical recording media capable of three-dimensional information recording are taken note of.

In general, any of the hologram optical recording media records information by superimposing inside a photosensitive recording layer an information light provided with a two-dimensional intensity distribution onto a reference light having an intensity approximately equal to that of the information light, and utilizing an interference pattern formed by those lights so as to generate a distribution of optical property inside the recording layer. Meanwhile, when the information written is read out (reproduced), the recording layer is only irradiated with reference light with an arrangement similar to that at the time of recording, and then the reference light is emitted from the recording layer as a reproduction light having an intensity distribution that corresponds with the optical property distribution formed inside the recording layer.

In the hologram optical recording medium, since an optical property distribution is three-dimensionally formed inside the recording layer, it is possible to allow an area where information is written by one information light and an area where information is written by another information light to overlap partially, in other words it is possible to carry out multiplex recording. Especially when digital volume holography is utilized, the signal-to-noise ratio (S/N ratio) per spot becomes very high, so that it becomes possible to reproduce original information faithfully even if the S/N ratio decreases to some extent owing to rewriting. Consequently, the number of multiplex recordings reaches up to several hundred, and thus it is possible to increase the storage capacity of the optical recording medium remarkably (refer to Patent Literature 1).

As such a hologram optical recording medium, there is provided, for example, an optical recording medium including: a lower substrate 1, a servo pit pattern 3 provided on the surface of the lower substrate 1, a reflective film 2 made of aluminum or the like on the surface of this servo pit pattern, a recording layer 4 over this reflective film, and an upper substrate 5 over this recording layer as shown in FIG. 1 (refer to Patent Literature 2).

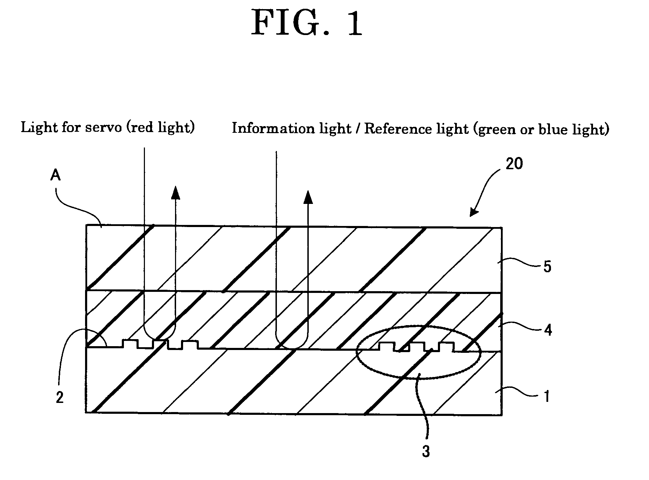

In the optical recording medium 20 shown in FIG. 1, however, servo zones and recording zones are separated from each other in the disc, thereby reducing the recording density by half, which is problematic.

Accordingly, in Patent Literature 3, circularly polarized lights are employed as information light and reference light, a cholesteric liquid crystal layer or a dichroic mirror is provided as a filter layer between a recording layer and a reflective film, and the recording layer and a servo layer are placed one on top of the other in the thickness direction. By this method, the recording density doubles. Moreover, when a cholesteric liquid crystal layer having a spiral structure with the same rotational direction as that of the circularly polarized light for the information light is used as the filter layer, productivity is improved, optical recording media can be inexpensively mass-produced, and there are favorable filter effects produced on the occasion of vertical light incidence of 0°. However, this proposal presents problems in which deviation of a selective reflection wavelength is caused when the incidence angle is changed, the information light and the reference light pass through the filter layer, reach as far as the reflective film and are reflected by the reflective film when incident light tilts by 10° or greater, and thus noise is caused. This means that the optical recording medium cannot be applied to incident lights of lens optical systems in ordinary optical recording media, that enter at angles of ±10° or greater focused by lenses.

Meanwhile, the use of the filter formed using the cholesteric liquid crystal layer makes it possible to lower production costs and is therefore a method suitable for mass production. However, although the filter formed of the cholesteric liquid crystal layer makes sufficient reflection possible when writing light or reading light (350nm to 600nm) is only formed of circularly polarized light, the reflectance falls to a minimum of 20% when the design of a recording system is switched to linearly polarized light or ordinary light, thereby generating a great deal of leaking light, which is problematic.

Meanwhile, as for the dichroic mirror, lights entering at incidence angles within ±45° can be totally reflected by providing a multilayer vapor-deposited film composed of 30 to 100 layers in total. However, such a multilayer vapor-deposited film leads to a dramatic increase in process cost, so that very expensive optical recording media which will not be easily accepted by the market are produced. Also, when a multilayer vapor-deposited film composed of 30 to 100 layers in total is continuously formed over a plastic sheet generally used as a base material by multi-chamber sputtering, there is a problem in which the plastic sheet is damaged by heat and thus deforms. Moreover, when a multilayer vapor-deposited film composed of 30 to 100 layers in total is incorporated in an optical recording medium, the multilayer vapor-deposited film comes into contact with an organic solvent, so that cracks are formed in the multilayer vapor-deposited film and thus recording and reproduction are made impossible in some cases.

Thus, a filter for an optical recording medium, in which deviation of a selective reflection wavelength is not caused even when the incidence angle is changed, and which can prevent diffused reflection of information light and reference light from a reflective film of the optical recording medium and can prevent occurrence of noise, and a hologram optical recording medium using the filter for an optical recording medium have not yet been efficiently mass-produced at low cost, and rapid provision of the filter for an optical recording medium, a method for producing the same and the hologram optical recording medium is hoped for, as things stand.

[Patent Literature 1] Japanese Patent Application Laid-Open (JP-A) No. 2002-123949

[Patent Literature 2] JP-A No. 11-311936

[Patent Literature 3] JP-A No. 2004-265472

### Disclosure of Invention

An object of the present invention is to provide: a filter for an optical recording medium, in which deviation of a selective reflection wavelength is not caused even when the incidence angle is changed, which can prevent diffused reflection of information light and reference light from a reflective film of the optical recording medium and can prevent occurrence of noise, and crack resistance is improved; a hologram optical recording medium capable of high-density recording, that uses the filter for an optical recording medium; a method for producing an optical recording medium, in which the optical recording medium can be efficiently produced at low cost; and an optical recording method and an optical reproducing method employing the optical recording medium.

Means for solving the problems are as follows.
<1> A filter for an optical recording medium, including: a plurality of high refractive index layers, and a plurality of low refractive index layers, wherein the high refractive index layers and the low refractive index layers are alternately deposited, the total number of the high refractive index layers and the low refractive index layers deposited is an even number in the range of 10 to 20, and the high refractive index layers and the low refractive index layers are different in thickness from one another.
   The present invention's filter for an optical recording medium is a multilayer vapor-deposited film wherein high and low refractive index layers, of which there are 10 to 20 in total, are alternately deposited, and those layers are different in thickness from one another. Therefore, crack resistance improves, and even if the total number of layers deposited is small, it is possible to remove angular dependency of reflection of irradiation light without causing deviation of a selective reflection wavelength even when the incidence angle is changed.
<2> The filter for an optical recording medium according to <1>, further including a base material, wherein a first layer which is in contact with the base material is a high refractive index layer, and a top layer positioned on a side of light incidence, which is farthest away from the base material, is a low refractive index layer.
<3> The filter for an optical recording medium according to <2>, wherein the top layer positioned on the side of light incidence, which is farthest away from the base material, is thicker than any other layer.
   As to the filter for an optical recording medium according to any one of <2> and <3>, it is possible to improve the light transmittance at a wavelength of 655nm by means of a structure in which the first layer that is in contact with the base material is a high refractive index layer, and the top layer is a low refractive index layer or the top layer is thicker than any other layer.
<4> The filter for an optical recording medium according to any one of <1> to <3>, wherein the high refractive index layers have a refractive index of 2.00 to 2.16 at a central wavelength of 633nm, and the low refractive index layers have a refractive index of 1.38 to 1.50 at a central wavelength of 633nm.
<5> The filter for an optical recording medium according to any one of <1> to <4>, wherein the optical thicknesses of the high refractive index layers and the optical thicknesses of the low refractive index layers are within the ranges shown in Tables A-1 and A-2 below.

### <Table A-1>

**Table 1-1**

| | | Optical thickness: nd | | | |
|---|---|---|---|---|---|
| | | 16-layer structure | 14-layer structure | 12-layer structure | 10-layer structure |
| Layer 1 on base material side | H (high refractive index layer) | 111.82 to 123.60 | 105.43 to 116.53 | 123.40 to 136.25 | 128.96 to 136.94 |
| 2 | L (low refractive index layer) | 114.59 to 126.65 | 108.44 to 119.86 | 110.62 to 122.14 | 113.29 to 120.29 |
| 3 | H (high refractive index layer) | 115.26 to 127.40 | 115.87 to 128.07 | 113.09 to 124.87 | 119.79 to 127.19 |
| 4 | L (low refractive index layer) | 116.34 to 128.58 | 117.71 to 130.11 | 116.46 to 128.59 | 118.50 to 125.84 |
| 5 | H (high refractive index layer) | 128.09 to 141.57 | 129.26 to 142.86 | 131.33 to 145.01 | 135.46 to 143.84 |
| 6 | L (low refractive index layer) | 130.23 to 143.93 | 131.48 to 145.32 | 134.30 to 148.29 | 127.26 to 135.14 |
| 7 | H (high refractive index layer) | 127.37 to 140.77 | 128.33 to 141.83 | 132.21 to 145.98 | 131.67 to 139.81 |
| 8 | L (low refractive index layer) | 129.11 to 142.71 | 130.67 to 144.43 | 125.57 to 138.65 | 116.89 to 124.12 |
| 9 | H (high refractive index layer) | 126.02 to 139.28 | 125.36 to 138.56 | 119.15 to 131.56 | 120.57 to 128.03 |
| 10 | L (low refractive index layer) | 129.05 to 142.63 | 119.71 to 132.31 | 109.65 to 121.07 | 261.98 to 278.18 |

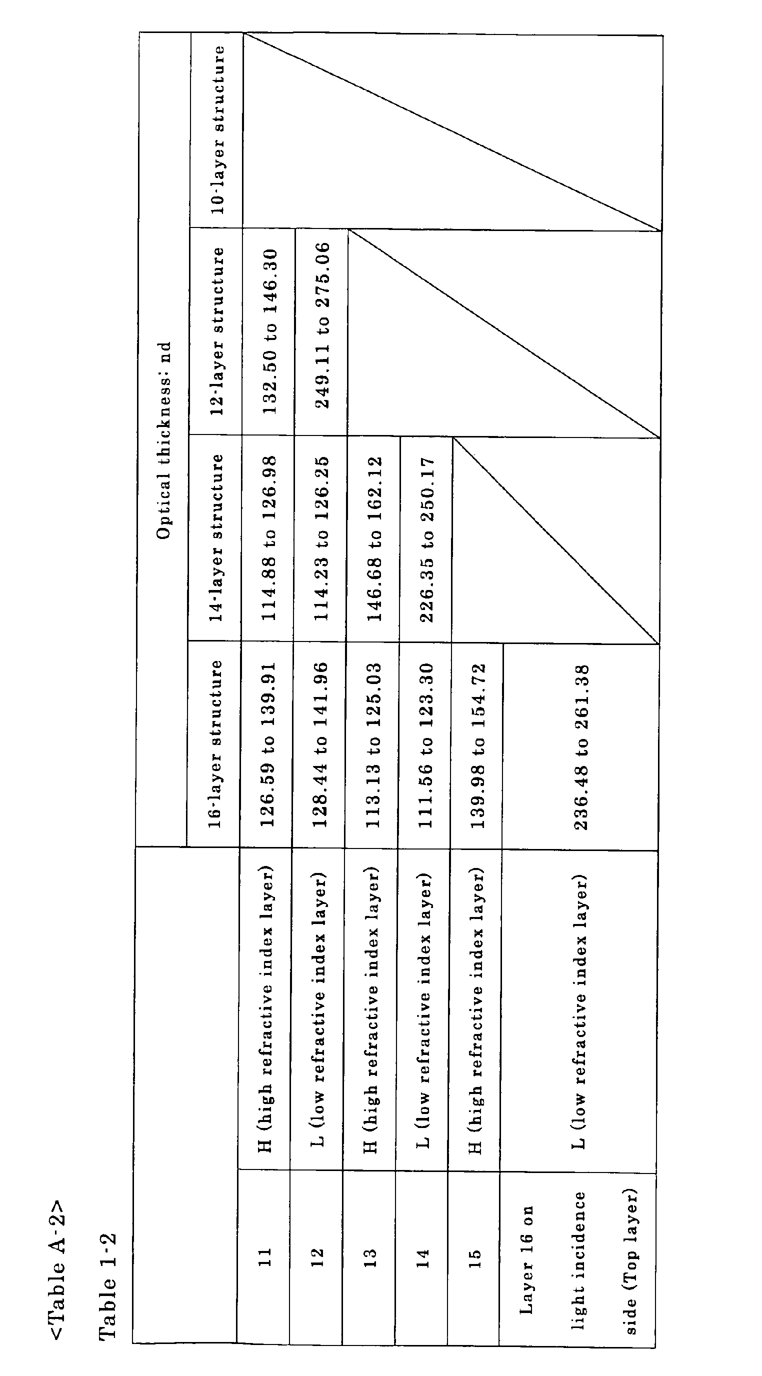

<6> The filter for an optical recording medium according to any one of <1> to <5>, wherein a material for the high refractive index layers is any one of TiO₂, Ta₂O₅ and Nb₂O₅.
<7> The filter for an optical recording medium according to any one of <1> to <6>, wherein a material for the low refractive index layers is one of SiO₂ and MgF₂.
<8> The filter for an optical recording medium according to any one of <2> to <7>, wherein the base material is a plastic sheet. As to the filter for an optical recording medium according to <8>, the plastic sheet can be suitably used as the base material without being damaged by heat.
<9> The filter for an optical recording medium according to any one of <1> to <8>, wherein the filter transmits a light with a first wavelength but reflects a light with a second wavelength, which is different from the light with the first wavelength.
<10> The filter for an optical recording medium according to <9>, wherein the light with the first wavelength is 350nm or greater and less than 600nm in wavelength, and the light with the second wavelength is in the range of 600nm to 900nm in wavelength.
<11> The filter for an optical recording medium according to any one of <1> to <10>, wherein the filter has a light transmittance of 80% or more at a wavelength of 655nm and a light transmittance of 20% or less at a wavelength of 532nm, at incidence angles of 0° to 31°.
<12> The filter for an optical recording medium according to any one of <1> to <11>, wherein the filter is used as a selective reflection film of an optical recording medium which records information by means of holography.
<13> The filter for an optical recording medium according to <12>, wherein information light and reference light are applied as coaxial light flux to the optical recording medium, and the optical recording medium records information according to an interference pattern formed by interference between the information light and the reference light.
<14> A method for producing a filter for an optical recording medium, including: alternately depositing a plurality of high refractive index layers and a plurality of low refractive index layers over a substrate by physical vapor deposition (PVD) without heating the inside of a chamber.
<15> The method for producing a filter for an optical recording medium according to <14>, wherein the physical vapor deposition (PVD) is multi-chamber sputtering in which the layers are continuously deposited using a plurality of chambers.
<16> The method for producing a filter for an optical recording medium according to any one of <14> and <15>, wherein each of the high refractive index layers is deposited at a deposition rate of 1 to 1.5 (Å/s).
   The method for producing a filter for an optical recording medium according to any one of <14> and <16> makes it possible to prevent a plastic sheet from being damaged by heat when the plastic sheet is used as a base material and thus to produce the filter for an optical recording medium efficiently.
<17> An optical recording medium including: an upper substrate, a lower substrate, a recording layer which records information by means of holography and is situated on the lower substrate, and a filter layer situated between the lower substrate and the recording layer, wherein the filter layer is the filter for an optical recording medium according to any one of <1> to <13>.
   Regarding the optical recording medium of the present invention, due to the above-mentioned structure, deviation of a selective reflection wavelength is not caused even when the incidence angle is changed, and information light, reference light and reproduction light used at the time of recording or reproduction do not reach the reflection film, so that it is possible to prevent occurrence of diffused light caused by diffused reflection on a reflecting surface. Therefore, it is possible to prevent a problem in which noise caused by the diffused light is superimposed onto a reproduced image and then detected on a CMOS sensor or CCD, and to detect the reproduced image at least to such an extent that errors can be corrected. The greater the multiplicity of a hologram is, the more problematic a noise component created by diffused light is. Specifically, the greater the multiplicity is (e.g. 10 or greater), the smaller the diffraction efficiency derived from one hologram is, so that when there is diffused noise, it is extremely difficult to detect a reproduced image. According to the present invention, it is possible to remove such difficulty and to realize high-density image recording like never before.
<18> The optical recording medium according to <17>, wherein the substrate is provided with a servo pit pattern.
<19> The optical recording medium according to <18>, wherein there is a reflective film on a surface of the servo pit pattern.
<20> The optical recording medium according to <19>, wherein a first gap layer for smoothing a surface of the lower substrate is provided between the filter layer and the reflective film. As to the optical recording medium according to <20>, the provision of the first gap layer between the filter layer and the reflective film makes it possible to protect the reflective film and also to adjust the size of a hologram created in the recording layer.
<21> The optical recording medium according to any one of <17> to <20>, wherein a second gap layer is provided between the recording layer and the filter layer. As to the optical recording medium according to <21>, the provision of the second gap layer enables a point where information light and reproduction light are focused to exist. If this area for focusing is filled with a photopolymer, a monomer is excessively consumed owing to excessive exposure, and thus multiplex recording capability is reduced. Accordingly, the provision of the second gap layer that is inert and transparent is effective.
<22> A recording method for an optical recording medium, including: applying information light and reference light as coaxial light flux to the optical recording medium according to any one of <17> to <21>, and recording information in the recording layer according to an interference pattern formed by interference between the information light and the reference light.
   Regarding the present invention's recording method for an optical recording medium, it is possible to realize high-density recording by applying information light and reference light as coaxial light flux with the use of the optical recording medium of the present invention, and by recording information in the recording layer according to an interference pattern formed by interference between the information light and the reference light.
<23> A reproducing method for an optical recording medium, including: reproducing information by applying reference light to an interference pattern recorded in a recording layer by the recording method according to <22>.

The present invention's reproducing method for an optical recording medium makes it possible to efficiently and precisely read an interference pattern recorded in a recording layer by the recording method of the present invention and thus to reproduce information recorded highly densely.

### Brief Description of Drawings

FIG. 1 is a schematic cross-sectional view showing the structure of a conventional optical recording medium.
FIG. 2 is a graph showing the light transmittances of multilayer vapor-deposited films having 10, 12, 14 and 16 deposited layers in total, at incidence angles of 0° to 31°.
FIG. 3 is a graph showing the light transmittances of filters of Examples 1 and 2 for an optical recording medium, at incidence angles of 0° to 31°.
FIG. 4 is a schematic cross-sectional view showing one example of an optical recording medium according to a first embodiment of the present invention.
FIG. 5 is a schematic cross-sectional view showing one example of an optical recording medium according to a second embodiment of the present invention.
FIG. 6 is an explanatory diagram showing one example of an optical system in the vicinity of an optical recording medium of the present invention.
FIG. 7 is a block diagram showing one example of the overall structure of an optical recording and reproducing apparatus incorporating an optical recording medium of the present invention.

### Best Mode for Carrying Out the Invention

### (Filter for Optical Recording Medium)

The present invention's filter for an optical recording medium is a filter including: a plurality of high refractive index layers, and a plurality of low refractive index layers, wherein the high refractive index layers and the low refractive index layers are alternately deposited, the total number of the high refractive index layers and the low refractive index layers deposited is an even number in the range of 10 to 20, and the high refractive index layers and the low refractive index layers are different in thickness from one another. Also, the filter includes a base material and further includes additional layer(s) according to necessity.

In a layered construction formed by alternately depositing high refractive index layers and low refractive index layers as described above (hereinafter otherwise referred to as "multilayer vapor-deposited film"), part of light which spreads through the multilayer vapor-deposited film undergoes multiple reflection in each layer, and due to interference of the reflected light, the multilayer vapor-deposited film selectively transmits only a light having such a wavelength as determined by multiplying the thickness of each layer by the layer's refractive index with respect to light. Also, since the wavelength of light passing through the center of the multilayer vapor-deposited film has angular dependency upon incident light, it is possible to change the wavelength by changing the angle of the incident light.

Therefore, it is desirable that the multilayer vapor-deposited film serving as the present invention's filter for an optical recording medium transmit a light with a first wavelength but reflect a light with a second wavelength, which is different from the light with the first wavelength, and that the light with the first wavelength be 350nm or greater and less than 600nm in wavelength, whereas the light with the second wavelength be in the range of 600nm to 900nm in wavelength.

Also, since the multilayer vapor-deposited film serving as the present invention's filter for an optical recording medium has a light transmittance of 80% or more (preferably 90% or more) at a wavelength of 655nm and a light transmittance of 20% or less (preferably 10% or less) at a wavelength of 532nm at incidence angles of 0° to 31°, signals can be read with no trouble. When the light transmittance is outside the above-mentioned ranges, noise light becomes intense at the time of reproduction, thereby leading to an unfavorable S/N ratio in some cases.

The total number of the high refractive index layers and the low refractive index layers deposited is an even number in the range of 10 to 20, namely any one of 10, 12, 14, 16, 18 and 20, preferably 12, 14, 16 and 18. When the total number is less than 10, the light transmittance exceeds 20% at a wavelength of 532nm, and when it is greater than 20, there is a reduction in production efficiency owing to the multilayer vapor deposition, or crack resistance becomes poor, thereby leaving the object and effects of the present invention unachievable in some cases.

It is desirable in terms of reduction in the number of layers that the filter for an optical recording medium include a base material, that a first layer which is in contact with the base material be a high refractive index layer, and that a top layer positioned on a side of light incidence, which is farthest away from the base material, be a low refractive index layer.

Also, regarding the filter for an optical recording medium, it is desirable that the top layer positioned on the side of light incidence, which is farthest away from the base material, be thicker than any other layer.

Here, the boundary between the highness and lowness in the refractive index of the layers is approximately 1.8. Additionally, it is not that the highness and lowness in the refractive index are measured in absolute terms, but that those relatively great in refractive index and those relatively small in refractive index may coexist amongst materials for the high refractive index layers and may be alternately used.

It is desirable that the high refractive index layers have a refractive index of 2.00 to 2.16 at a central wavelength of 633nm. Meanwhile, it is desirable that the low refractive index layers have a refractive index of 1.38 to 1.50 at a central wavelength of 633nm.

The total number of the high refractive index layers and the low refractive index layers deposited is preferably any one of 10, 12, 14 and 16, and the optical thicknesses (each of which is a value (nd) calculated by multiplying the refractive index (n) and the physical thickness (d) together) of the high refractive index layers and the low refractive index layers are preferably within the ranges shown in Tables A-1 and A-2 below.

### <Table A-1>

**Table 2-1**

| | | Optical thickness: nd | | | |
|---|---|---|---|---|---|
| | | 16-layer structure | 14-layer structure | 12-layer structure | 10-layer structure |
| Layer 1 on base material side | H (high refractive index layer) | 111.82 to 123.60 | 105.43 to 116.53 | 123.40 to 136.25 | 128.96 to 136.94 |
| 2 | L (low refractive index layer) | 114.59 to 126.65 | 108.44 to 119.86 | 110.62 to 122.14 | 113.29 to 120.29 |
| 3 | H (high refractive index layer) | 115.26 to 127.40 | 115.87 to 128.07 | 113.09 to 124.87 | 119.79 to 127.19 |
| 4 | L (low refractive index layer) | 116.34 to 128.58 | 117.71 to 130.11 | 116.46 to 128.59 | 118.50 to 125.84 |
| 5 | H (high refractive index layer) | 128.09 to 141.57 | 129.26 to 142.86 | 131.33 to 145.01 | 135.46 to 143.84 |
| 6 | L (low refractive index layer) | 130.23 to 143.93 | 131.48 to 145.32 | 134.30 to 148.29 | 127.26 to 135.14 |
| 7 | H (high refractive index layer) | 127.37 to 140.77 | 128.33 to 141.83 | 132.21 to 145.98 | 131.67 to 139.81 |
| 8 | L (low refractive index layer) | 129.11 to 142.71 | 130.67 to 144.43 | 125.57 to 138.65 | 116.89 to 124.12 |
| 9 | H (high refractive index layer) | 126.02 to 139.28 | 125.36 to 138.56 | 119.15 to 131.56 | 120.57 to 128.03 |
| 10 | L (low refractive index layer) | 129.05 to 142.63 | 119.71 to 132.31 | 109.65 to 121.07 | 261.98 to 278.18 |

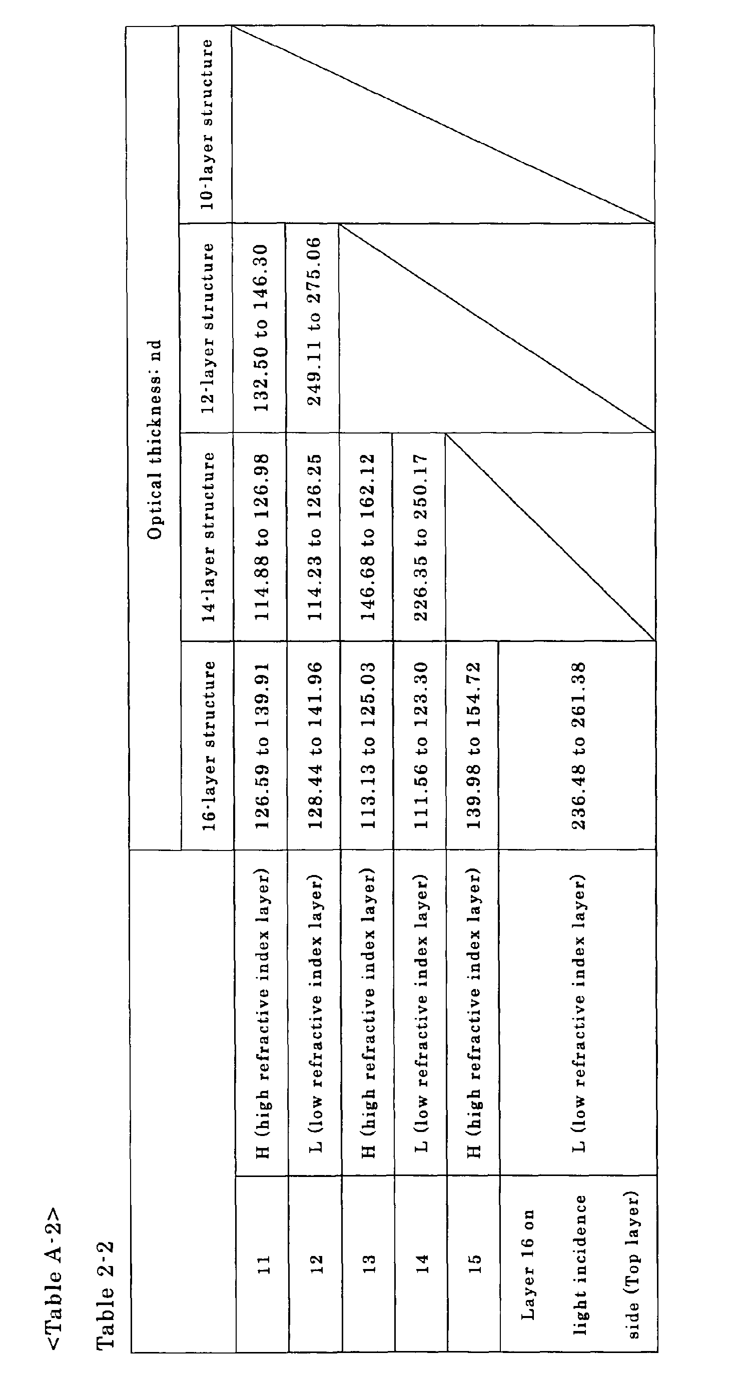

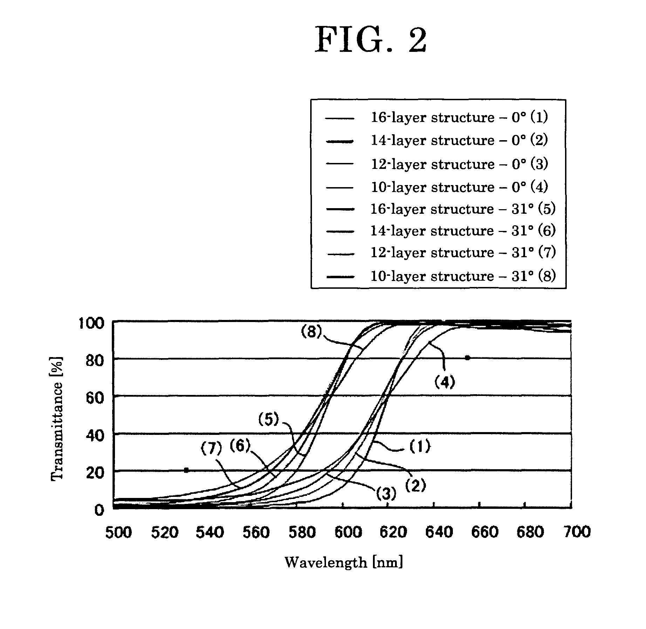

The results of measurements of light transmittance properties carried out on multilayer vapor-deposited films incorporating layers whose optical thicknesses are within such ranges are shown in FIG. 2.

The results in FIG. 2 reveal that the multilayer vapor-deposited film in which the total number of the high refractive index layers and the low refractive index layers deposited is any one of 10, 12, 14 and 16, and in which the optical thicknesses of the high refractive index layers and the optical thicknesses of the low refractive index layers are within the ranges shown in Tables A-1 and A-2 above has a light transmittance of 80% or more at a wavelength of 655nm and a light transmittance of 20% or less at a wavelength of 532nm, at incidence angles of 0° to 31°.

The material for the high refractive index layers is not particularly limited and can be suitably selected according to the purpose. Examples thereof include Sb₂O₃, Sb₂S₃, Bi₂O₃, CeO₂, CeF₃, HfO₂, La₂O₃, Nd₂O₃, Pr₆O₁₁, Sc₂O₃, SiO, Ta₂O₅, TiO₂, TlCl, Y₂O₃, ZnSe, ZnS, ZrO₂ and Nb₂O₅, with TiO₂, Ta₂O₅ and Nb₂O₅ being particularly preferable.

The material for the low refractive index layers is not particularly limited and can be suitably selected according to the purpose. Examples thereof include Al₂O₃, BiF₃, CaF₂, LaF₃, PbCl₂, PbF₂, LiF, MgF₂, MgO, NdF₃, SiO₂, Si₂O₃, NaF, ThO₂ and ThF₄, with SiO₂ and MgF₂ being particularly preferable.

Additionally, the atomic ratios of the material for the high refractive index layers and of the material for the low refractive index layers are not particularly limited either, can be suitably selected according to the purpose and can be adjusted by changing the atmospheric gas concentrations when the layers are deposited.

The method for forming the multilayer vapor-deposited film as the filter for an optical recording medium is not particularly limited and can be suitably selected according to the purpose. It should be noted that the multilayer vapor-deposited film can be efficiently produced by the after-mentioned present invention's method for producing a filter for an optical recording medium.

The overall thickness of the multilayer vapor-deposited film is not particularly limited and can be suitably selected according to the purpose, with the range of 0.5µm to 10.0µm being desirable and the range of 1.0µm to 3.0µm being more desirable.

### <Base Material>

The shape, structure, size and the like of the base material are not particularly limited and can be suitably selected according to the purpose. Examples of the shape include flat plate-like shape and sheet-like shape. Examples of the structure include single-layer structure and laminated structure. The size of the base material can be suitably selected, for example according to the size of the filter for an optical recording medium.

The material for the base material is not particularly limited and can be suitably selected from both inorganic materials and organic materials. Nevertheless, it is desirable that the material be an organic material, more desirably a plastic sheet.

Examples of the inorganic materials include glass, quartz and silicon.

Examples of the organic materials include acetate resins such as triacetylcellulose, polyester resins, polyether sulfone resins, polysulfone resins, polycarbonate resins, polyamide resins, polyimide resins, polyolefin resins, acrylic resins, polynorbornene resins, cellulose resins, polyarylate resins, polystyrene resins, polyvinyl alcohol resins, polyvinyl chloride resins, polyvinylidene chloride resins and polyacrylic resins. These may be used independently or in combination.

The base material may be formed of an appropriately synthesized material or a commercially available product.

The thickness of the base material is not particularly limited and can be suitably selected according to the purpose, with the range of 10µm to 500µm being desirable and the range of 50µm to 300µm being more desirable. When the thickness of the base material is less than 10µm, adhesiveness is reduced in some cases due to flexure of the base material. When it is greater than 500µm, the focal positions of information light and reference light need to be shifted substantially, thereby inevitably enlarging the size of the optical system.

### (Method for Producing Filter for Optical Recording Medium)

The present invention's method for producing a filter for an optical recording medium includes a step of alternately depositing a plurality of high refractive index layers and a plurality of low refractive index layers over a substrate by physical vapor deposition (PVD) without heating the inside of a chamber and further includes additional step(s) according to necessity.

Here, the expression "without heating the inside of a chamber" means that the layers are deposited by physical vapor deposition (PVD) without heating the inside of the chamber. Specifically, it means that the layers are deposited with the temperature of the inside of the chamber kept between room temperature and the heat-resistant temperature of a base material. Consequently, even when a plastic sheet is used for the base material, it is possible to prevent the plastic sheet from being damaged by heat.

Similarly, in order to prevent the plastic sheet from being damaged by heat, it is desirable to lower the deposition rate. Specifically, it is desirable that each of the high refractive index layers be deposited at a deposition rate of 1 to 1.5 (Å/s) and that each of the low refractive index layers be deposited at a deposition rate of 1 to 1.5 (Å/s).

The method for depositing the high and low refractive index layers is not particularly limited and can be suitably selected according to the purpose. Examples thereof include physical vapor deposition (PVD) methods such as vacuum vapor deposition, sputtering, ion plating, ion beam method, ion-assisted method and laser abrasion; and chemical vapor deposition (CVD) methods such as thermal CVD, photo-CVD and plasma CVD. Amongst these, physical vapor deposition (PVD) methods are preferable, and sputtering is particularly preferable.

For the sputtering, DC sputtering in which the deposition rate is high is suitable. Additionally, in the DC sputtering, it is desirable to use a highly conductive material.

Multilayer deposition by means of the sputtering is exemplified by (1) one-chamber system in which a plurality of target layers are deposited alternately or in turn in one chamber, and (2) multi-chamber system in which layers are continuously deposited in a plurality of chambers, with (2) multi-chamber system being preferable in terms of productivity and prevention of contamination of material.

Examples of the additional step(s) include a step of forming the multilayer vapor-deposited film including the base material into the shape of a disc (for example by means of punching).

When the present invention's filter for an optical recording medium is used as a filter layer of the optical recording medium, it is also possible to provide the filter layer directly on a lower substrate, with no base material being placed in between.

The present invention's filter for an optical recording medium can be used in a variety of fields. It should be noted that the filter can be suitably used in forming or producing hologram optical recording media and particularly suitably used in the present invention's hologram optical recording medium, recording method for the optical recording medium and reproducing method for the optical recording medium described below.

### (Optical Recording Medium)

The optical recording medium of the present invention includes an upper substrate, a lower substrate, a recording layer situated on the lower substrate, and a filter layer situated between the lower substrate and the recording layer. Also, the optical recording medium includes a reflective film, a first gap layer and a second gap layer and further includes additional layer(s) according to necessity.

For the filter layer, the present invention's filter for an optical recording medium is used.

### - Substrate -

The shape, structure, size and the like of the substrate are not particularly limited and can be suitably selected according to the purpose. Examples of the shape include disc-like shape and card-like shape, and it is necessary to select a substrate formed of such a material as makes it possible to secure sufficient mechanical strength of the optical recording medium. Note that when light used for recording and reproduction enters through the substrate, it is necessary for the substrate to be sufficiently transparent in the wavelength range of the light used.

As the material for the substrate, glass, ceramics, resin or the like is normally used, with resin being particularly suitable in terms of cost.

Examples of the resin include polycarbonate resins, acrylic resins, epoxy resins, polystyrene resins, acrylonitrile-styrene copolymers, polyethylene resins, polypropylene resins, silicone resins, fluorine resins, ABS resins and urethane resins, with polycarbonate resins and acrylic resins being particularly preferable in terms of molding capability, optical property and cost.

The substrate may be formed of an appropriately synthesized material or a commercially available product.

On the substrate, address-servo areas serving as positioning areas that linearly extend in its radial direction are provided at predetermined regular angular intervals to one another, and sectorial spaces between adjacent address-servo areas are data areas. In each address-servo area, information necessary for performing a focus servo and a tracking servo according to a sampled servo mode and address information are recorded in advance by embossed pits (servo pits) or the like (preformat). The focus servo can be performed using a reflecting surface of the reflective film. For the information necessary for performing a tracking servo, wobble pits can be utilized, for example. Additionally, when the optical recording medium is shaped like a card, the servo pit pattern is not required.

The thickness of the substrate is not particularly limited and can be suitably selected according to the purpose, with the range of 0.1mm to 5mm being desirable and the range of 0.3mm to 2mm being more desirable. When the thickness of the substrate is less than 0.1mm, deformation of a disc is sometimes inevitable when stored. When it is greater than 5mm, the weight of a disc increases as a whole, thereby leading to an excessive load on the drive motor in some cases.

### - Recording Layer -

The recording layer records information therein by means of holography. For the recording layer, a material is used whose optical properties such as absorption coefficient and refractive index vary according to the intensity of an applied electromagnetic wave having a predetermined wavelength.

The material for the recording layer is not particularly limited and can be suitably selected according to the purpose. Examples thereof include (1) photopolymers which induce polymerization reaction when irradiated with light and which thusly polymerize, (2) photorefractive materials exhibiting photorefractive effect (in which space charge distribution is produced by light irradiation, and thus the refractive index is modulated), (3) photochromic materials in which molecular isomerization is produced by light irradiation, and thus the refractive index is modulated, (4) inorganic materials such as lithium niobate and barium titanate, and (5) chalcogen materials.

The photopolymers of (1) are not particularly limited and can be suitably selected according to the purpose. For example, each of the photopolymers contains a monomer and a photoinitiator and further contains a sensitizer, an oligomer and additional component(s) according to necessity.

For the photopolymers, those described in "Photopolymer Handbook" (Kogyo Chosakai Publishing Co., Ltd., 1989), "Photopolymer Technology" (Nikkan Kogyo Shinbun, 1989), SPIE Proceedings Vol. 3,010, pp. 354 to 372 (1997) and SPIE Proceedings Vol. 3,291, pp. 89 to 103 (1998) can be used. Also, those described in US Patent Nos. 5,759,721, 4,942,112, 4,959,284 and 6,221,536, International Publication Nos. WO97/44714, WO97/13183 and WO99/26112, Japanese Patent (JP-B) Nos. 2880342, 2873126, 2849021, 3057082 and 3161230, Japanese Patent Application Laid-Open (JP-A) Nos. 2001-316416 and 2000-275859 and so forth can be used as well.

The method of irradiating the photopolymers with recording light so as to change their optical properties is exemplified by a method utilizing diffusion of a low molecular component, and so forth. To lessen volume change at the time of polymerization, a component which diffuses in a direction opposed to a polymerized component may be added, or a compound having an acidic cleavage structure may be separately added besides the polymer. Additionally, when the recording layer is formed using any of the photopolymers containing low molecular components, a structure in which liquid can be kept in the recording layer is required in some cases. Also, when the compound having an acidic cleavage structure is added, the volume change may be controlled by allowing expansion caused by the cleavage and contraction caused by the polymerization of a monomer to offset each other.

The monomer is not particularly limited and can be suitably selected according to the purpose. Examples thereof include radical polymerization type monomers having unsaturated bonds such as acryl group and methacryl group, and cationic polymerization type monomers having ether structures such as epoxy rings and oxetane rings. These monomers may be monofunctional or multifunctional and may be those utilizing photocrosslinking reaction.

Examples of the radical polymerization type monomers include acryloylmorpholine, phenoxyethyl acrylate, isobornyl acrylate, 2-hydroxypropyl acrylate, 2-ethylhexyl acrylate, 1,6-hexanediol diacrylate, tripropylene glycol diacrylate, neopentyl glycol PO-modified diacrylate, 1,9-nonanediol diacrylate, hydroxypivalate neopentyl glycol diacrylate, EO-modified bisphenol A diacrylate, polyethylene glycol diacrylate, pentaerythritol triacrylate, pentaerythritol tetraacrylate, pentaerythritol hexaacrylate, EO-modified glycerol triacrylate, trimethylolpropane triacrylate, EO-modified trimethylolpropane triacrylate, 2-naphtho-1-oxyethyl acrylate, 2-carbazoyl-9-yl-ethyl acrylate, (trimethylsilyloxy)dimethylsilylpropyl acrylate, vinyl-1-naphthoate and N-vinyl carbazole.

Examples of the cationic polymerization type monomers include bisphenol A epoxy resins, phenol novolak epoxy resins, glycerol triglycidyl ether, 1,6-hexane glycidyl ether, vinyl trimethoxysilane, 4-vinylphenyl trimethoxysilane, γ-methacryloxypropyl triethoxysilane and the compounds represented by Structural Formulae (A) to (E) below.

These monomers may be used independently or in combination.

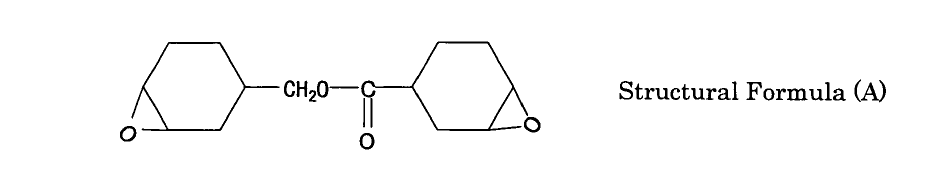

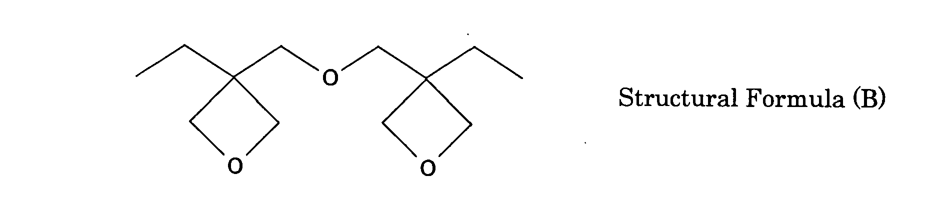

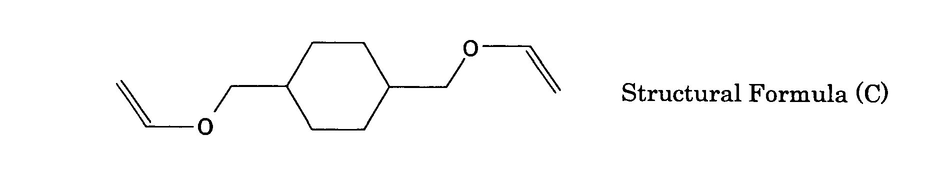

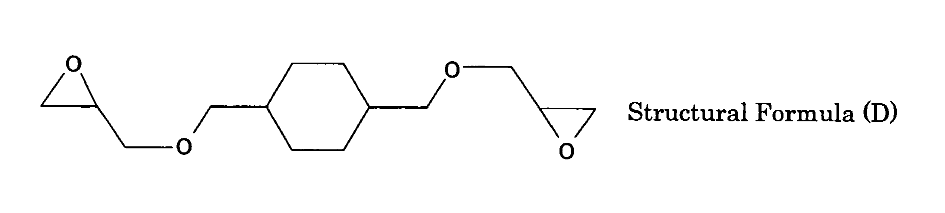

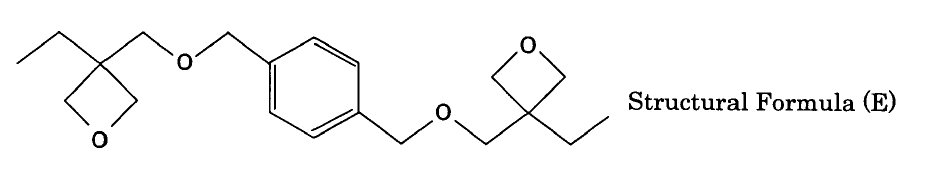

The photoinitiator is not particularly limited as long as it is sensitive to the recording light, and examples thereof include materials which induce radical polymerization, cationic polymerization or crosslinking reaction when irradiated with light.

Specific examples thereof include
2,2'-bis(o-chlorophenyl)-4,4',5,5'-tetraphenyl-1,1'-biimidazole,
2,4,6-tris(trichloromethyl)-1,3,5-triazine,
2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiphenyliodonium tetrafluoroborate, 4-diethylaminophenylbenzenediazonium hexafluorophosphate, benzoin, 2-hydroxy-2-methyl-1-phenylpropane-2-one, benzophenone, thioxanthone, 2,4,6-trimethylbenzoyldiphenylacylphosphine oxide, triphenylbutyl borate tetraethyl ammonium and the titanocene compound represented by the structural formula below. These may be used independently or in combination. Also, sensitizing dye may be additionally used depending upon the wavelength of the light to be applied.

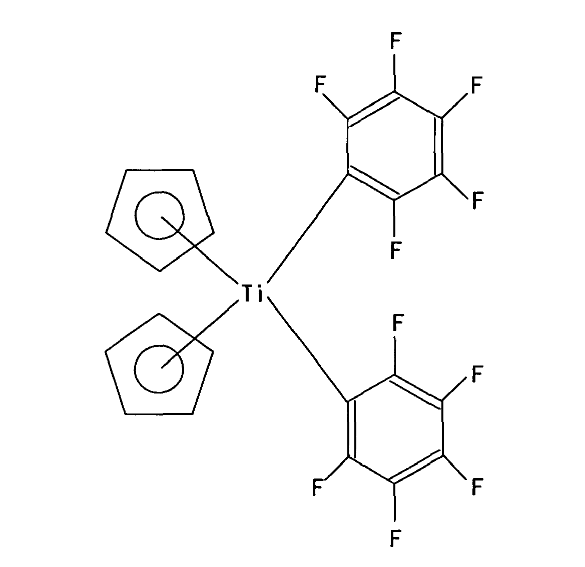

Each of the photopolymers is obtained by stirring and mixing the monomer, the photoinitiator and, if necessary, the additional component(s) to produce reaction amongst them. When the obtained photopolymer has a sufficiently low viscosity, the recording layer can be formed by means of casting. Meanwhile, when the photopolymer is a highly viscous photopolymer that is not suitable for casting, the recording layer can be formed by placing the photopolymer over the lower substrate with the use of a dispenser, then pressing the upper substrate onto the photopolymer as if the photopolymer is covered with a lid, and thusly spreading the photopolymer throughout.

The material for any of the photorefractive materials of (2) is not particularly limited and can be suitably selected according to the purpose, as long as it exhibits photorefractive effect. For example, the material contains a charge generating material and a charge transporting material and further contains additional component(s) according to necessity.

The charge generating material is not particularly limited and can be suitably selected according to the purpose. Examples thereof include phthalocyanine dyes/pigments such as metal phthalocyanine, metal-free phthalocyanine and derivatives thereof; naphthalocyanine dyes/pigments; azo dyes/pigments such as monoazo-, diazo- and triazo-dyes/pigments; perylene dyes/pigments; indigo dyes/pigments; quinacridone dyes/pigments; polycyclic quinone dyes/pigments such as anthraquinone and anthoanthorone; cyanine dyes/pigments; charge transfer complexes composed of electron-accepting materials and electron-donating materials, such as TTF-TCNQ; azulenium salts; and fullerenes typified by C₆₀ and C₇₀ and methanofullerenes that are derivatives thereof. These may be used independently or in combination.

The charge transporting material is a material transporting holes or electrons and may be a low molecular compound or a high molecular compound.

The charge transporting material is not particularly limited and can be suitably selected according to the purpose. Examples thereof include nitrogen-containing cyclic compounds such as indole, carbazole, oxazole, inoxazole, thiazole, imidazole, pyrazole, oxadiazole, pyrazoline, thiathiazole and triazole, and derivatives thereof; hydrazone compounds; triphenylamines; triphenylmethanes; butadienes; stilbenes; quinone compounds such as anthraquinone diphenoquinone, and derivatives thereof; fullerenes such as C₆₀ and C₇₀, and derivatives thereof; π conjugated polymers or oligomers, such as polyacetylene, polypyrrol, polythiophene and polyaniline; σ conjugated polymers or oligomers, such as polysilane and polygermane; and polycyclic aromatic compounds such as anthracene, pyrene, phenanthrene and coronen. These may be used independently or in combination.

The method for forming the recording layer by using any of the photorefractive materials is exemplified by a method in which a coating film is formed using a coating solution composed of a solvent and the photoreactive material dissolved or dispersed in the solvent, and in which the recording layer is formed by removing the solvent from this coating film. In addition, it is also possible to provide the recording layer by creating a coating film with the use of the photoreactive material which has been heated and thusly fluidized, and rapidly cooling this coating film.

The photochromic materials of (3) are not particularly limited and can be suitably selected according to the purpose, as long as they are materials which induce photochromic reaction. Examples thereof include azobenzene compounds, stilbene compounds, indigo compounds, thioindigo compounds, spiropyran compounds, spirooxazine compounds, fluxide compounds, anthracene compounds, hydrazon compounds and cinnamate compounds. What are particularly preferable amongst these are azobenzene derivatives and stilbene derivatives which induce structural change due to their cis-trans isomerization when irradiated with light, and spiropyran derivatives and spirooxazine derivatives which induce structural change related to the opening and closing of rings when irradiated with light.

The chalcogen materials of (5) are exemplified by materials including chalcogen element-containing chalcogenide glass and metallic particles formed of metal that are dispersed in the chalcogenide glass and can be diffused in the chalcogenide glass when irradiated with light.

The chalcogenide glass is not particularly limited as long as it is formed of a nonoxide amorphous material containing any of the chalcogen elements of S, Te and Se and enables photodoping of the metallic particles.

Examples of the amorphous material containing any of the chalcogen elements include Ge-S based glass, As-S based glass, As-Se based glass and As-Se-Ce based glass, with Ge-S based glass being preferable. When Ge-S based glass is used for the chalcogenide glass, the constituent ratio between Ge and S constituting the glass can be freely changed according to the wavelength of the light applied, with major preference given to chalcogenide glass having the chemical composition represented by GeS₂.

The metallic particles are not particularly limited and can be suitably selected according to the purpose, as long as they have such a characteristic that they are subjected to photodoping in the chalcogenide glass when irradiated with light. Examples thereof include particles of Al, Au, Cu, Cr, Ni, Pt, Sn, In, Pd, Ti, Fe, Ta, W, Zn and Ag. Amongst these, Ag, Au and Cu are preferable in that they have such a characteristic as makes it easier to induce photodoping, and Ag is particularly preferable in that the photodoping is conspicuously induced.

The contained amount of the metallic particles dispersed in the chalcogenide glass is preferably 0.1vol.% to 2vol.%, more preferably 0.1vol.% to 1.0vol.%, based upon the total volume of the recording layer. When the contained amount of the metallic particles is less than 0.1vol.%, transmittance change derived from the photodoping becomes insufficient, thereby reducing recording accuracy in some cases. When it is greater than 2vol.%, the light transmittance of a recording material decreases, thereby making it difficult to induce photodoping sufficiently in some cases.

The recording layer can be formed in accordance with a known method based upon the material therefor. Examples of known methods include vapor deposition, wet film deposition, MBE (molecular beam epitaxy) method, cluster ion beam method, molecular lamination method, LB method, printing method and transfer method, with vapor deposition and wet film deposition being preferable.

The vapor deposition is not particularly limited and can be suitably selected from known vapor depositions according to the purpose. Examples thereof include vacuum vapor deposition, resistance heating vapor deposition, chemical vapor deposition and physical vapor deposition. Examples of the chemical vapor deposition include plasma CVD, laser CVD, thermal CVD and gas source CVD.

The recording layer can be suitably formed in accordance with the wet film deposition, for example by using (applying and drying) a solution (coating solution) in which the recording layer material is dissolved or dispersed in a solvent. The wet film deposition is not particularly limited and can be suitably selected from known wet film depositions according to the purpose. Examples thereof include inkjet method, spin coating, kneader coating, bar coating, blade coating, casting, dipping and curtain coating.

The thickness of the recording layer is not particularly limited and can be suitably selected according to the purpose, with the range of 1µm to 1,000µm being desirable and the range of 100µm to 700µm being more desirable.

When the thickness of the recording layer is within the desirable range, it is possible to obtain a favorable S/N ratio even if shift multiplexing with a multiplex of 10 to 300 is performed. When it is within the more desirable range, there is such an advantage that a favorable S/N ratio can be conspicuously obtained.

### - Reflective Film -

The reflective film is formed on the surface of the servo pit pattern of the substrate.

As the material for the reflective film, it is desirable to use a material having a high reflectance with respect to the recording light and the reference light. When the wavelength of the light used is in the range of 400nm to 780nm, it is desirable to use Al, Al alloy, Ag or Ag alloy, for example. When it is greater than 650nm, it is desirable to use Al, Al alloy, Ag, Ag alloy, Au, Cu alloy or TiN, for example.

Additionally, in using an optical recording medium which reflects light and which is capable of either deletion or one-time writing, such as a DVD (digital video disc), for the reflective film, it is possible to write once or rewrite, for example, directory information about as far as which area a hologram was recorded, when it was rewritten, where there was an error and how replacement was carried out, etc. without giving a negative effect to the hologram.

The method for forming the reflective film is not particularly limited and can be suitably selected according to the purpose. Examples thereof include vapor phase growth methods such as vacuum vapor deposition, sputtering, plasma CVD, photo-CVD, ion plating and electron beam vapor deposition, with sputtering being superior in terms of mass productivity and film quality.

The reflective film preferably has a thickness of 50nm or greater, more preferably 100nm or greater, in order that a sufficiently high reflectance can be yielded.

### - First Gap Layer -

The first gap layer is provided between the filter layer and the reflective film if necessary for the purpose of smoothing the surface of the lower substrate. Also, the first gap layer is effectively utilized in adjusting the size of a hologram created in the recording layer. In other words, since it is necessary to form in the recording layer a somewhat large interference region of the reference light for recording and the information light, provision of a gap between the recording layer and the servo pit pattern is effective.

The first gap layer can be formed, for example by applying a material such as a UV-curable resin onto the servo pit pattern by means of spin coating or the like, and curing the material. When a transparent base material coated with the material is used as the filter layer, the transparent base material serves also as the first gap layer.

The thickness of the first gap layer is not particularly limited and can be suitably selected according to the purpose, with the range of 1µm to 200µm being preferable.

### - Second Gap Layer -

The second gap layer is provided between the recording layer and the filter layer if necessary.

The material for the second gap layer is not particularly limited and can be suitably selected according to the purpose. Examples thereof include transparent resin films formed of triacetyl cellulose (TAC), polycarbonate (PC), polyethylene terephthalate (PET), polystyrene (PS), polysulfone (PSF), polyvinyl alcohol (PVA) and polymethyl methacrylate (PMMA); and norbornene resin films such as ARTON FILM (brand name) produced by JSR Corporation and ZEONOR (brand name) produced by Zeon Corporation. Amongst these, those having high isotropy are preferable, and TAC, PC, ARTON (brand name) and ZEONOR (brand name) are particularly preferable.

The thickness of the second gap layer is not particularly limited and can be suitably selected according to the purpose, with the range of 1µm to 200µm preferable.

Here, the optical recording medium of the present invention is explained in further detail, referring to the drawings.

### <First Embodiment>

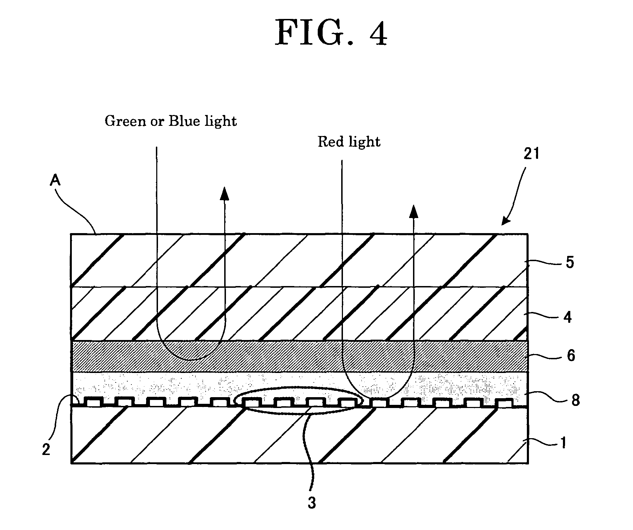

FIG. 4 is a schematic cross-sectional view showing the structure of an optical recording medium according to a first embodiment of the present invention. In an optical recording medium 21 according to the first embodiment, a servo pit pattern 3 is formed on a substrate 1 made of polycarbonate resin or glass, and the servo pit pattern 3 is coated with aluminum, gold, platinum, etc. to provide a reflective film 2 thereon. Note that although the servo pit pattern 3 is formed on the entire surface of the lower substrate 1 in FIG. 4, it may be formed at regular intervals as shown in FIG. 1. Additionally, the servo pit pattern 3 normally has a height of 1750Å (175nm), which is small enough in comparison with the thickness of any of the other layers such as the substrate.

A first gap layer 8 is formed by applying a material such as a UV-curable resin onto the reflective film 2 on the lower substrate 1 by means of spin coating or the like. The first gap layer 8 protects the reflective film 2 and is effectively utilized in adjusting the size of a hologram created in a recording layer 4. In other words, since it is necessary to form in the recording layer 4 a somewhat large interference region of reference light for recording and information light, provision of a gap between the recording layer 4 and the servo pit pattern 3 is effective.

A filter layer 6 is provided on the first gap layer 8, and the optical recording medium 21 is formed as the recording layer 4 is sandwiched between the filter layer 6 and un upper substrate 5 (substrate made of polycarbonate resin or glass).

In FIG. 4, the filter layer 6 only transmits red light and does not transmit any other colors. Thus, since the information light and the reference lights for recording and reproduction are either green or blue, they do not pass through the filter layer 6 but become return lights without reaching the reflective film 2 and exit from a light incidence/exit surface A.

This filter layer 6 is a multilayer vapor-deposited film wherein high refractive index layers and low refractive index layers, of which there are 10 to 20 in total, are alternately deposited, and those layers are different in thickness from one another. Use of this filter layer makes it possible for the light transmittance to be 80% or more at a wavelength of 655nm and 20% or less at a wavelength of 532nm, at incidence angles of 0° to 31°, and thus deviation of a selective reflection wavelength is not caused even when the incidence angle is changed.

The filter layer 6 composed of the multilayer vapor-deposited film may be directly formed over the first gap layer 8 by vacuum vapor deposition; alternatively, a film including a base material and a multilayer vapor-deposited film on the base material may be formed into the shape of an optical recording medium by means of punching and thusly provided.

The optical recording medium 21 of the present embodiment may be shaped like a disc or card. When it is shaped like a card, the servo pit pattern is not required. In the optical recording medium 21, the thicknesses of the lower substrate 1, the first gap layer 8, the filter layer 6, the recording layer 4 and the upper substrate 5 are 0.6mm, 100µm, 2µm to 3µm, 0.6mm and 0.6mm respectively, and the total thickness thereof is approximately 1.9mm.

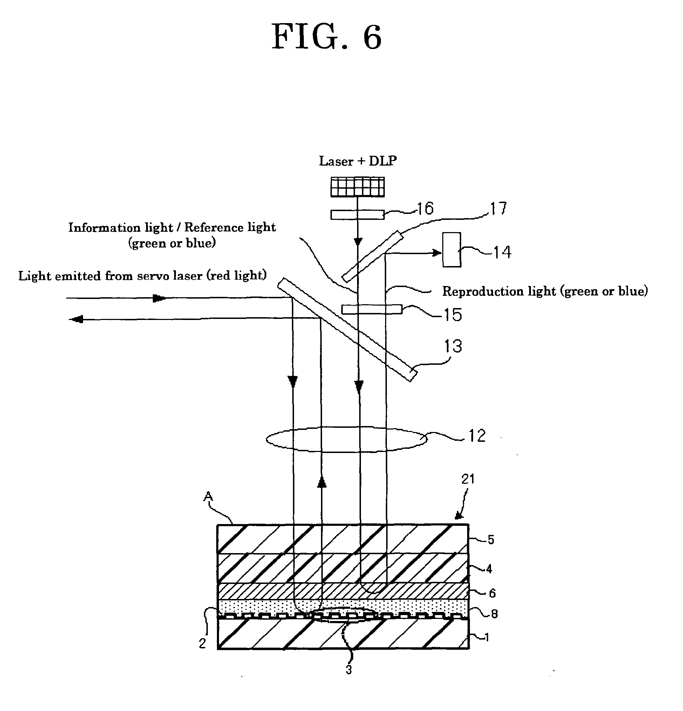

Next, optical operation in the vicinity of the optical recording medium 21 will be explained referring to FIG. 6. First of all, light (red light) emitted from a servo laser is reflected almost 100 percent by a dichroic mirror 13 and then passes through an objective lens 12. Due to this objective lens 12, the light for a servo is applied to the optical recording medium 21 in such a manner as to focus on the reflective film 2. In other words, the dichroic mirror 13 transmits lights in the green and blue wavelength regions but reflects lights in the red wavelength region almost 100 percent. The light for a servo which has entered from a light incidence/exit surface A of the optical recording medium 21 passes through the upper substrate 5, the recording layer 4, the filter layer 6 and the first gap layer 8 and is subsequently reflected by the reflective film 2. After that, the light passes through the first gap layer 8, the filter layer 6, the recording layer 4 and the upper substrate 5 again and then exits from the light incidence/exit surface A. The return light that has exited passes through the objective lens 12, is subsequently reflected by the dichroic mirror 13 almost 100 percent and servo information is thus detected by a servo information detector (not shown in the figure). The servo information detected is used for a focus servo, tracking servo, slide servo, etc. The hologram material forming the recording layer 4 is not sensitive to red light, so that when the light for a servo passes through the recording layer 4 or is diffusely reflected by the reflective film 2, it does not affect the recording layer 4. Also, since the return light derived from the light for a servo that has been reflected by the reflective film 2 is then reflected by the dichroic mirror 13 almost 100 percent, the light for a servo is not detected by a CMOS sensor or CCD 14 for detecting a reproduced image and does not become noise against reproduction light either.

Information light and reference light for recording, generated from a laser for recording/reproduction, become linearly polarized lights by passing through a polarizing plate 16 and then become circularly polarized lights on passing through a 1/4 wavelength plate 15 after having passed a half mirror 17. The information light and the reference light for recording pass through the dichroic mirror 13 and are subsequently applied to the optical recording medium 21 by the objective lens 12 such that an interference pattern will be created in the recording layer 4. The information light and the reference light for recording enter from the light incidence/exit surface A and then interfere with each other in the recording layer 4 to create an interference pattern there. Thereafter, the information light and the reference light for recording pass through the recording layer 4 and enter the filter layer 6, but they are reflected and become return lights without reaching the bottom surface of the filter layer 6. In other words, the information light and the reference light for recording do not reach as far as the reflective film 2. That is because the filter layer 6 is a multilayer vapor-deposited film wherein high refractive index layers and low refractive index layers, of which there are 10 to 20 in total, are alternately deposited, and those layers are different in thickness from one another, and the filter layer 6 has such a characteristic that it only transmits red light. Additionally, in the case where there is light which leaks through the filter layer 6, the intensity of the leaking light is reduced to 20% or less of the incident light intensity. Therefore, even if the leaking light reaches the bottom surface of the filter layer and then becomes a return light, the return light is reflected by the filter layer again, so that the intensity of light mixed into the reproduction light is 20%x20%=4% or less, which causes virtually no problem.

### <Second Embodiment>

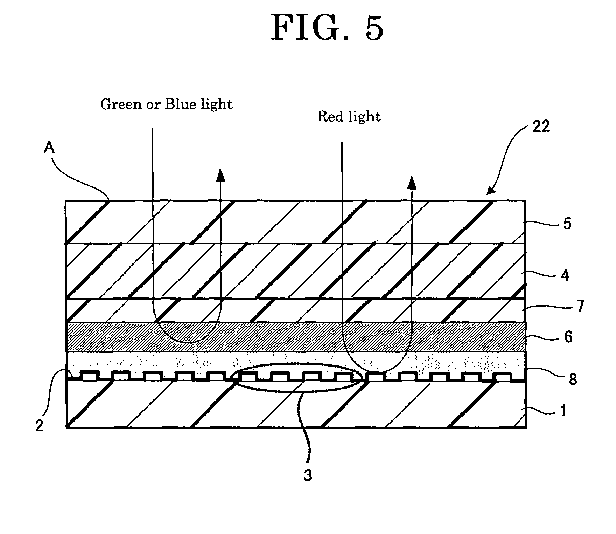

FIG. 5 is a schematic cross-sectional view showing the structure of an optical recording medium according to a second embodiment of the present invention. In an optical recording medium 22 according to the second embodiment, a servo pit pattern 3 is formed on a substrate 1 made of polycarbonate resin or glass, and the servo pit pattern 3 is coated with aluminum, gold, platinum, etc. to provide a reflective film 2 thereon. Additionally, the servo pit pattern 3 normally has a height of 1750Å (175nm) as in the first embodiment.

The difference between the structure of the optical recording medium of the second embodiment and that of the optical recording medium of the first embodiment is that there is a second gap layer 7 provided between a filter layer 6 and a recording layer 4 in the optical recording medium 22 of the second embodiment. A point where information light and reproduction light focus is present in this second gap layer 7. If this area for focusing is filled with a photopolymer, a monomer is excessively consumed owing to excessive exposure, and thus multiplex recording capability is reduced. Accordingly, the provision of the second gap layer that is inert and transparent is effective.

The filter layer 6 that is a multilayer vapor-deposited film wherein high refractive index layers and low refractive index layers, of which there are 10 to 20 in total, are alternately deposited, and those layers are different in thickness from one another is formed on a first gap layer 8 after the first gap layer 8 has been formed. For the filter layer 6 given herein, a filter layer similar to the one according to the first embodiment can be used.

In the optical recording medium 22 of the second embodiment, the thicknesses of the lower substrate 1, the first gap layer 8, the filter layer 6, the second gap layer 7, the recording layer 4 and an upper substrate 5 are 1.0mm, 100µm, 3µm to 5µm, 70µm, 0.6mm and 0.4mm respectively, and the total thickness thereof is approximately 2.2mm.

Next, when information is recorded or reproduced, a red light for a servo, a green information light and green reference lights for recording and reproduction are applied to the optical recording medium 22 of the second embodiment having the above-mentioned structure. The light for a servo enters from a light incidence/exit surface A, passes through the recording layer 4, the second gap layer 7, the filter layer 6 and the first gap layer 8, and then becomes a return light after reflected by the reflective film 2. This return light passes through the first gap layer 8, the filter layer 6, the second gap layer 7, the recording layer 4 and the upper substrate 5 again in this order and exits from the light incidence/exit surface A. The return light which has exited is used for a focus servo, tracking servo, etc. The hologram material forming the recording layer 4 is not sensitive to red light, so that when the light for a servo passes through the recording layer 4 or is diffusely reflected by the reflective film 2, it does not affect the recording layer 4. The green lights such as the information light enter from the light incidence/exit surface A, pass through the recording layer 4 and the second gap layer 7, and then become return lights after reflected by the filter layer 6. These return lights pass through the second gap layer 7, the recording layer 4 and the upper substrate 5 again in this order and exit from the light incidence/exit surface A. At the time of reproduction, reproduction light generated by applying the reference light for reproduction to the recording layer 4, as well as the reference light for reproduction itself, exits from the light incidence/exit surface A without reaching the reflective film 2. Here, optical operation in the vicinity of the optical recording medium 22 (an objective lens 12, the filter layer 6, and a CMOS sensor or CCD 14 as a detector in FIG. 6) is similar to the one according to the first embodiment, so that explanations thereof will be omitted.

The present invention's method for producing an optical recording medium includes at least a step of forming a filter layer, includes a step of forming a reflective film and a step of forming a recording layer, and further includes additional step(s) according to necessity.

### - Step of Forming Filter Layer -

The step of forming a filter layer is a step of forming the present invention's filter for an optical recording medium into the shape of the optical recording medium, and then forming a filter layer by affixing the filter to the lower substrate.

Here, the present invention's method for producing a filter for an optical recording medium is as described above.

Examples of the shape of the optical recording medium include disc-like shape and card-like shape.

The method of forming the filter into such a shape is not particularly limited and can be suitably selected according to the purpose. Examples thereof include cutting by means of a press cutter and punching by means of a punching cutter.

As for the affixing, the filter is affixed to the lower substrate in such a manner as to prevent air bubbles from being present in between, using an adhesive, a tackiness agent or the like.

The adhesive is not particularly limited and can be suitably selected according to the purpose. Examples thereof include UV-curable adhesives, emulsion-type adhesives, one-liquid hardening type adhesives and two-liquid hardening type adhesives, for each of which known adhesives can be used in a combined manner according to necessity.

The tackiness agent is not particularly limited and can be suitably selected according to the purpose. Examples thereof include rubber-based tackiness agents, acrylic tackiness agents, silicone-based tackiness agents, urethane-based tackiness agents, vinyl alkyl ether based tackiness agents, polyvinyl alcohol based tackiness agents, polyvinyl pyrrolidone based tackiness agents, polyacrylamide-based tackiness agents and cellulose-based tackiness agents.

The coating thickness of the adhesive or the tackiness agent is not particularly limited and can be suitably selected according to the purpose, with the range of 0.1µm to 10µm being desirable and the range of 0.1µm to 5µm being more desirable in the case of the adhesive, in terms of optical property and reduction in thickness. Meanwhile, in the case of the tackiness agent, the range of 1µm to 50µm is desirable and the range of 2µm to 30µm is more desirable.

### (Recording Method for Optical Recording Medium and Reproducing Method for The Same)

The present invention's recording method for an optical recording medium is a method wherein information light and reference light are applied as coaxial light flux to the optical recording medium of the present invention, and information is recorded in a recording layer according to an interference pattern formed by interference between the information light and the reference light.

The present invention's reproducing method for an optical recording medium is a method wherein information is reproduced by applying reference light to an interference pattern recorded in a recording layer, using the present invention's recording method for an optical recording medium.

As described above, in the present invention's recording method for an optical recording medium and reproducing method for the same, information is recorded by combining inside a photosensitive recording layer an information light provided with a two-dimensional intensity distribution and a reference light having an intensity approximately equal to that of the information light, and utilizing an interference pattern formed by those lights so as to generate a distribution of optical property inside the recording layer. Meanwhile, when the information written is read out (reproduced), the recording layer is only irradiated with reference light with an arrangement similar to that at the time of recording, and then the reference light is emitted from the recording layer as a reproduction light having an intensity distribution that corresponds with the optical property distribution formed inside the recording layer.

Here, the present invention's recording and reproducing methods for an optical recording medium can be suitably performed using an optical recording and reproducing apparatus of the present invention explained below.

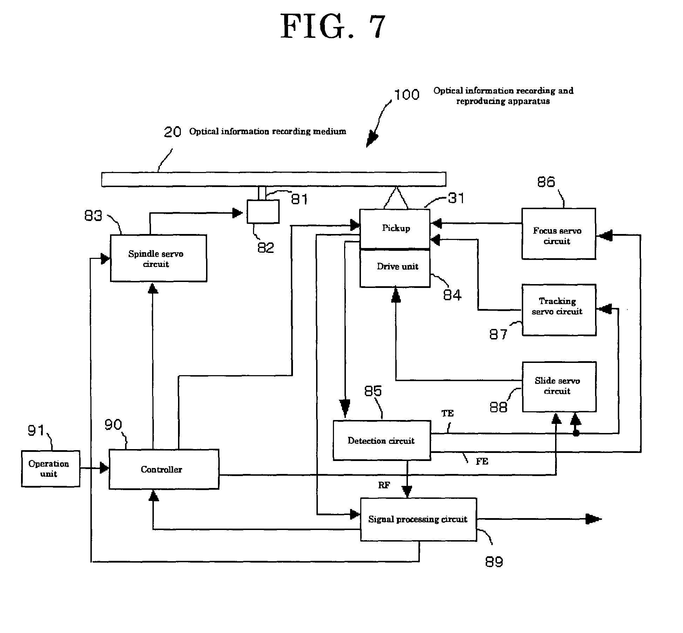

An optical recording and reproducing apparatus employed in the present invention's recording and reproducing methods for an optical recording medium will be explained referring to FIG. 7.

This optical recording and reproducing apparatus 100 is equipped with a spindle 81 to which an optical recording medium 20 is attached, a spindle motor 82 which rotates this spindle 81, and a spindle servo circuit 83 which controls the spindle motor 82 in such a manner as to keep the rotational speed of the optical recording medium 20 at a predetermined value.

Also, the optical recording and reproducing apparatus 100 is equipped with a pickup 31 used for recording information in the optical recording medium 20 by irradiating the optical recording medium 20 with information light and reference light for recording, and also used for reproducing the information in the optical recording medium 20 by irradiating the optical recording medium 20 with reference light for reproduction and detecting reproduction light; and a drive unit 84 which makes it possible for this pickup 31 to move in the radial direction of the optical recording medium 20.

In addition, the optical recording and reproducing apparatus 100 is equipped with a detection circuit 85 for detecting a focus error signal FE, a tracking error signal TE and a reproduction signal RF incorporated in output signals from the pickup 31; a focus servo circuit 86 which performs a focus servo by driving an actuator in the pickup 31 based upon the focus error signal FE detected by the detection circuit 85, and thusly moving an objective lens (not shown in the figure) in the thickness direction of the optical recording medium 20; a tracking servo circuit 87 which performs a tracking servo by driving the actuator in the pickup 31 based upon the tracking error signal TE detected by the detection circuit 85, and thusly moving the objective lens in the radial direction of the optical recording medium 20; and a slide servo circuit 88 which performs a slide servo by controlling the drive unit 84 based upon the tracking error signal TE and a command from a controller described later, and thusly moving the pickup 31 in the radial direction of the optical recording medium 20.

Further, the optical recording and reproducing apparatus 100 is equipped with a signal processing circuit 89 which reproduces data recorded in a data area of the optical recording medium20 by decoding output data from an after-mentioned CMOS or CCD array in the pickup 31, and which reproduces a basic clock according to the reproduction signal RF from the detection circuit 85 and identifies an address; a controller 90 which controls the optical recording and reproducing apparatus 100 as a whole; and an operation unit 91 which gives various instructions to this controller 90. The controller 90 inputs the basic clock and address information output from the signal processing circuit 89 and controls the pickup 31, the spindle servo circuit 83, the slide servo circuit 88 and so forth. The spindle servo circuit 83 inputs the basic clock output from the signal processing circuit 89. The controller 90 includes a CPU (central processing unit), a ROM (read-only memory) and a RAM (random access memory), and the functions of the controller 90 are performed by the CPU executing programs stored in the ROM, with the RAM serving as an operation area.

Since the optical recording and reproducing apparatus employed in the present invention's recording and reproducing methods for an optical recording medium uses the optical recording medium of the present invention, deviation of a selective reflection wavelength is not caused even when the incidence angle is changed, and it is possible to prevent diffused reflection of information light and reference light from a reflective film of the optical recording medium, prevent occurrence of noise and thus realize high-density recording.

According to the present invention, it is possible to solve problems in related art and to provide: a filter for an optical recording medium, in which deviation of a selective reflection wavelength is not caused even when the incidence angle is changed, which can prevent diffused reflection of information light and reference light from a reflective film of the optical recording medium and can prevent occurrence of noise, and crack resistance is improved; a hologram optical recording medium capable of high-density recording, that uses the filter for an optical recording medium; a method for producing an optical recording medium, in which the optical recording medium can be efficiently produced at low cost; and an optical recording method and an optical reproducing method employing the optical recording medium.

### EXAMPLES

The following explains Examples of the present invention; however, it should be noted that the present invention is not confined to these Examples in any way.

### (Example 1)

### - Production of Filter for Optical Recording Medium -

A base film was prepared in which a triacetyl cellulose film of 100µm in thickness (FUJITAC 12/3 produced by FUJIFILM Corporation) was coated with dipentaerythritol hexaacrylate (produced by Nippon Kayaku Co., Ltd.) to a thickness of 0.5µm.

Next, by carrying out multi-chamber sputtering (CUBE produced by Unaxis Balzers AG) under the following conditions, a multilayer vapor-deposited film wherein high refractive index layers formed of TiO₂ and low refractive index layers formed of SiO₂, of which there were 10 in total, were alternately deposited, and wherein those layers were different in thickness from one another as shown in Table 3 below was formed over the base film. The overall thickness of the multilayer vapor-deposited film obtained was 1.42µm. A filter for an optical recording medium according to Example 1 was thus produced.

### <Sputtering Condition>

● The deposition rate at which each of the high refractive index layers (TiO₂) were deposited: 1.2Å/s.
● The deposition rate at which each of the low refractive index layers (SiO₂) were deposited: 1.2Å/s.
● Heating was not carried out inside chambers.

**Table 3**

| | | Material | 10-layer structure | | |
|---|---|---|---|---|---|
| | | | Refractive index: n | Physical thickness: d | Optical thickness: nd |
| Layer 1 on base material side | H (high refractive index layer) | TiO₂ | 2.1576 | 61.62 | 132.95 |
| 2 | L (low refractive index layer) | SiOz | 1.4637 | 79.79 | 116.79 |
| 3 | H (high refractive index layer) | TiOz | 2.1576 | 57.24 | 123.50 |
| 4 | L (low refractive index layer) | SiOz | 1.4637 | 83.47 | 122.18 |
| 5 | H (high refractive index layer) | TiOz | 2.1576 | 64.73 | 139.66 |
| 6 | L (low refractive index layer) | SiO₂ | 1.4637 | 89.63 | 131.19 |
| 7 | H (high refractive index layer) | TiOz | 2.1576 | 62.92 | 135.76 |
| 8 | L (low refractive index layer) | SiOz | 1.4637 | 82.33 | 120.51 |
| 9 | H (high refractive index layer) | TiOz | 2.1576 | 57.61 | 124.30 |
| Layer 10 on light incidence side (Top layer) | L (low refractive index layer) | SiOz | 1.4637 | 184.51 | 270.07 |

### (Example 2)

### - Production of Filter for Optical Recording Medium -

A filter for an optical recording medium according to Example 2 was produced similarly to that of Example 1, except that a multilayer vapor-deposited film was yielded wherein high refractive index layers formed of TiO₂ and low refractive index layers formed of SiO₂, of which there were 16 in total, were alternately deposited, and those layers were different in thickness from one another as shown in Tables 4-1 and 4-2 below, and that the overall thickness of the multilayer vapor-deposited film was changed to 2.19µm.

**Table 4-1**

| | | Material | 16-layer structure | | |
|---|---|---|---|---|---|
| | | | Refractive index: n | Physical thickness: d | Optical thickness: nd |
| Layer 1 on base material side | H (high refractive index layer) | TiOz | 2.1576 | 54.56 | 117.72 |
| 2 | L (low refractive index layer) | SiOz | 1.4637 | 82.41 | 120.62 |
| 3 | H (high refractive index layer) | TiOz | 2.1576 | 56.24 | 121.34 |
| 4 | L (low refractive index layer) | SiO₂ | 1.4637 | 83.66 | 122.45 |
| 5 | H (high refractive index layer) | TiOz | 2.1576 | 62.49 | 134.83 |
| 6 | L (low refractive index layer) | SiOz | 1.4637 | 93.65 | 137.08 |
| 7 | H (high refractive index layer) | TiOz | 2.1576 | 62.14 | 134.07 |
| 8 | L (low refractive index layer) | SiOz | 1.4637 | 92.85 | 135.90 |
| 9 | H (high refractive index layer) | TiOz | 2.1576 | 61.48 | 132.65 |
| 10 | L (low refractive index layer) | SiO₂ | 1.4637 | 92.81 | 135.85 |
| 11 | H (high refractive index layer) | TiOz | 2.1576 | 61.76 | 133.25 |
| 12 | L (low refractive index layer) | SiOz | 1.4637 | 92.37 | 135.20 |

**Table 4-2**

| | | Material | 10-layer structure | | |
|---|---|---|---|---|---|
| | | | Refractive index: n | Physical thickness: d | Optical thickness: nd |
| 13 | H (high refractive index layer) | TiO₂ | 2.1576 | 55.19 | 119.08 |
| 14 | L (low refractive index layer) | SiOz | 1.4637 | 80.23 | 117.43 |
| 15 | H (high refractive index layer) | TiOz | 2.1576 | 68.29 | 147.34 |
| Layer 16 on light incidence side (Top layer) | L (low refractive index layer) | SiO₂ | 1.4637 | 170.07 | 248.93 |

### (Comparative Example 1)

### - Production of Filter for Optical Recording Medium -

A filter for an optical recording medium according to Comparative Example 1 was produced similarly to that of Example 1, except that a multilayer vapor-deposited film was yielded wherein high refractive index layers formed of TiO₂ and low refractive index layers formed of SiO₂, of which there were 40 in total, were alternately deposited, the high refractive index layers had an equal thickness and the low refractive index layers had an equal thickness as shown in Tables 5-1 to 5-4 below, and that the overall thickness of the multilayer vapor-deposited film was changed to 5.18µm.

**Table 5-1**

| | | Material | 40-layer structure | | |
|---|---|---|---|---|---|
| | | | Refractive index: n | Physical thickness: d | Optical thickness: nd |
| Layer 1 on base material side | H (high refractive index layer) | TiOz | 2.1576 | 52.6 | 113.5 |
| 2 | L (low refractive index layer) | SiO₂ | 1.4637 | 76.8 | 112.4 |
| 3 | H (high refractive index layer) | TiOz | 2.1576 | 52.6 | 113.5 |
| 4 | L (low refractive index layer) | SiOz | 1.4637 | 76.8 | 112.4 |
| 5 | H (high refractive index layer) | TiOz | 2.1576 | 52.6 | 113.5 |
| 6 | L (low refractive index layer) | SiOz | 1.4637 | 76.8 | 112.4 |
| 7 | H (high refractive index layer) | TiOz | 2.1576 | 52.6 | 113.5 |
| 8 | L (low refractive index layer) | SiOz | 1.4637 | 76.8 | 112.4 |
| 9 | H (high refractive index layer) | TiOz | 2.1576 | 52.6 | 113.5 |
| 10 | L (low refractive index layer) | SiOz | 1.4637 | 76.8 | 112.4 |
| 11 | H (high refractive index layer) | TiOz | 2.1576 | 52.6 | 113.5 |
| 12 | L (low refractive index layer) | SiO₂ | 1.4637 | 76.8 | 112.4 |

**Table 5-2**

| | | Material | 16-layer structure | | |
|---|---|---|---|---|---|
| | | | Refractive index: n | Physical thickness: d | Optical thickness: nd |
| 13 | H (high refractive index layer) | TiO₂ | 2.1576 | 52.6 | 113.5 |
| 14 | L (low refractive index layer) | SiOz | 1.4637 | 76.8 | 112.4 |
| 15 | H (high refractive index layer) | TiOz | 2.1576 | 52.6 | 113.5 |
| 16 | L (low refractive index layer) | SiOz | 1.4637 | 76.8 | 112.4 |
| 17 | H (high refractive index layer) | TiOz | 2.1576 | 52.6 | 113.5 |
| 18 | L (low refractive index layer) | SiOz | 1.4637 | 76.8 | 112.4 |
| 19 | H (high refractive index layer) | TiOz | 2.1576 | 52.6 | 113.5 |
| 20 | L (low refractive index layer) | SiOz | 1.4637 | 76.8 | 112.4 |
| 21 | H (high refractive index layer) | TiOz | 2.1576 | 52.6 | 113.5 |
| 22 | L (low refractive index layer) | SiO₂ | 1.4637 | 76.8 | 112.4 |
| 23 | H (high refractive index layer) | TiOz | 2.1576 | 52.6 | 113.5 |
| 24 | L (low refractive index layer) | SiOz | 1.4637 | 76.8 | 112.4 |

**Table 5-3**

| | | Material | 16-layer structure | | |
|---|---|---|---|---|---|
| | | | Refractive index: n | Physical thickness: d | Optical thickness: nd |
| 25 | H (high refractive index layer) | TiO₂ | 2.1576 | 52.6 | 113.5 |
| 26 | L (low refractive index layer) | SiO₂ | 1.4637 | 76.8 | 112.4 |
| 27 | H (high refractive index layer) | TiOz | 2.1576 | 52.6 | 113.5 |
| 28 | L (low refractive index layer) | SiO₂ | 1.4637 | 76.8 | 112.4 |
| 29 | H (high refractive index layer) | TiO₂ | 2.1576 | 52.6 | 113.5 |
| 30 | L (low refractive index layer) | SiOz | 1.4637 | 76.8 | 112.4 |
| 31 | H (high refractive index layer) | TiOz | 2.1576 | 52.6 | 113.5 |
| 32 | L (low refractive index layer) | SiOz | 1.4637 | 76.8 | 112.4 |
| 33 | H (high refractive index layer) | TiOz | 2.1576 | 52.6 | 113.5 |
| 34 | L (low refractive index layer) | SiO₂ | 1.4637 | 76.8 | 112.4 |
| 35 | H (high refractive index layer) | TiOz | 2.1576 | 52.6 | 113.5 |
| 36 | L (low refractive index layer) | SiOz | 1.4637 | 76.8 | 112.4 |

**Table 5-4**

| | | Material | 10-layer structure | | |
|---|---|---|---|---|---|
| | | | Refractive index: n | Physical thickness: d | Optical thickness: nd |
| 37 | H (high refractive index layer) | TiO₂ | 2.1576 | 52.6 | 113.5 |
| 38 | L (low refractive index layer) | SiO₂ | 1.4637 | 76.8 | 112.4 |
| 39 | H (high refractive index layer) | TiO₂ | 2.1576 | 52.6 | 113.5 |
| Layer 40 on light incidence side (Top layer) | L (low refractive index layer) | SiOz | 1.4637 | 76.8 | 112.4 |

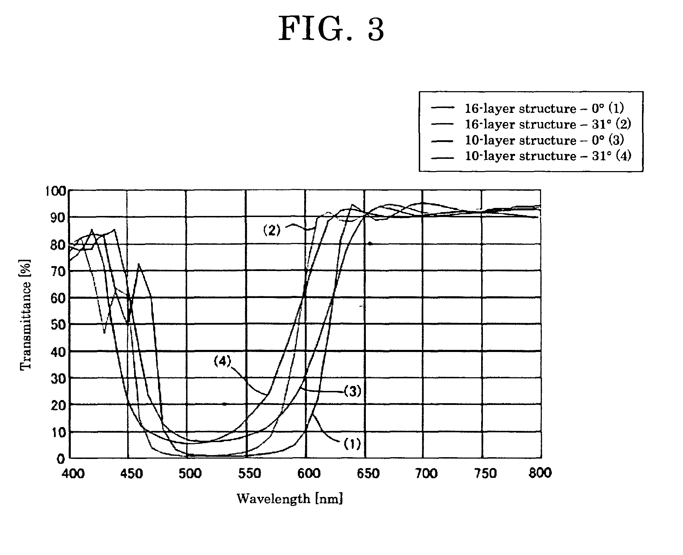

Next, the obtained filters for an optical recording medium according to Examples 1 and 2 were measured for light-reflecting properties, using a spectral reflectance measuring apparatus (light source: L-5662 manufactured by Hamamatsu Photonics K.K.; photo multi-channel analyzer: PMA-11 manufactured by Hamamatsu Photonics K.K.). The results are shown in FIG. 3. In FIG. 3, (1) and (2) represent the results for Example 2, while (3) and (4) represent the results for Example 1.

Judging from the results in FIG. 3, it was confirmed that the filters for an optical recording medium according to Examples 1 and 2 had light transmittances of 80% or more at a wavelength of 655nm and light transmittances of 20% or less at a wavelength of 532nm, at incidence angles of 0° to 31°. Additionally, the filter for an optical recording medium according to Comparative Example 1, for which the results are not shown in the figure, yielded results which were at the same level as those for Example 2.

### (Example 3)

### - Production of Optical Recording Medium -

As a lower substrate, an ordinary substrate made of polycarbonate resin for DVD+RW, which was 120mm in diameter and 0.6mm in thickness, was used. A servo pit pattern was formed all over the surface of this substrate, and it had a track pitch of 0.74µm, a groove depth of 175nm and a groove width of 300nm.

Firstly, a reflective film was formed over the surface of the servo pit pattern on the lower substrate. Aluminum (Al) was used as the material for the reflective film. In the film formation, an Al reflective film of 200nm in thickness was formed by DC magnetron sputtering.

Secondly, the filter for an optical recording medium produced in Example 1 was cut into a predetermined disc size by means of punching and affixed onto the Al reflective film such that its base film surface faced the side of the servo pit pattern. As for the affixing, the filter was affixed onto the Al reflective film in such a manner as to prevent air bubbles from being present in between, using a UV-curable resin, a thickener or the like. A filter layer was thus formed.

Thirdly, as the material for a recording layer, a photopolymer coating solution with the following composition was prepared.

### <Composition of Photopolymer Coating Solution>

● di(urethane acrylate) oligomer (ALU-351 produced by Echo Resins and Laboratory) 59 parts by mass
● isobornyl acrylate 30 parts by mass
● vinyl benzoate 10 parts by mass
● polymerization initiator (IRGACURE 784 produced by Ciba Specialty Chemicals plc.) 1 part by mass

Fourthly, the photopolymer coating solution obtained was placed over the filter layer, using a dispenser, then while an upper substrate made of polycarbonate resin, which was 12cm in diameter and 0.6mm in thickness, was being pressed onto the photopolymer coating solution, a disc end section and the upper substrate were stuck together with an adhesive. Additionally, the disc end section was provided with a flange section such that the photopolymer layer had a thickness of 500µm. The thickness of the photopolymer layer was determined by sticking the upper substrate thereto, and an excess photopolymer overflowed and was removed. An optical recording medium of Example 3 was thus produced.

### (Example 4)

### - Production of Optical Recording Medium -

An optical recording medium of Example 4 was produced similarly to that of Example 3, except that the filter for an optical recording medium produced in Example 2 was used instead of the filter for an optical recording medium produced in Example 1. (Comparative Example 2)

### - Production of Optical Recording Medium -

An optical recording medium of Comparative Example 2 was produced similarly to that of Example 3, except that the filter for an optical recording medium produced in Comparative Example 1 was used instead of the filter for an optical recording medium produced in

### Example 1.

### <Crack Resistance>

Whether or not cracks had been formed in the filter layers was visually observed after peeling away the upper substrates and the recording layers of the optical recording media assembled, and evaluations were carried out based upon the evaluation criteria below. The results are shown in Table 6.

### [Evaluation Criteria]

A: The filter layer was favorable without cracks being formed therein.
B: Cracks were formed in the filter layer.

### <Evaluation of Number of Multiplex Recordings>

Next, recording and reproduction of information were actually carried out on the optical recording media of Examples 3 and 4 and Comparative Example 2 obtained, using a collinear optical information recording and reproducing examiner (SHOT-1000 manufactured by Pulstec Industrial Co., Ltd.), and the numbers of multiplex recordings which the optical recording media enabled were measured. The results are shown in Table 6.

**Table 6**

| | Filter for optical recording medium | Crack resistance | Number of multiplex recordings possible |
|---|---|---|---|
| Example 3 | Example 1 | A | 5 to 10 |
| Example 4 | Example 2 | A | 50 to 250 |
| Comparative Example 2 | Comparative Example 1 | B | Impossible to measure |

Judging from the results in Table 6, it was confirmed that since the present invention's filters for an optical recording medium were used as the filter layers in Examples 3 and 4, these Examples enabled multiplex high-density recording, which is the ultimate object of hologram optical recording media, and yielded superior crack resistance.

Meanwhile, Comparative Example 2 did not enable recording and reproduction, with cracks being formed in the filter layer.

## Claims

1. A filter for an optical recording medium, comprising:
a plurality of high refractive index layers, and
a plurality of low refractive index layers,
wherein the high refractive index layers and the low refractive index layers are alternately deposited, the total number of the high refractive index layers and the low refractive index layers deposited is an even number in the range of 10 to 20, and the high refractive index layers and the low refractive index layers are different in thickness from one another.

2. The filter for an optical recording medium according to claim 1, further comprising a base material, wherein a first layer which is in contact with the base material is a high refractive index layer, and a top layer positioned on a side of light incidence, which is farthest away from the base material, is a low refractive index layer.

3. The filter for an optical recording medium according to claim 2, wherein the top layer positioned on the side of light incidence, which is farthest away from the base material, is thicker than any other layer.

4. The filter for an optical recording medium according to any one of claims 1 to 3, wherein the high refractive index layers have a refractive index of 2.00 to 2.16 at a central wavelength of 633nm, and the low refractive index layers have a refractive index of 1.38 to 1.50 at a central wavelength of 633nm.

5. The filter for an optical recording medium according to any one of claims 1 to 4, wherein the optical thicknesses of the high refractive index layers and the optical thicknesses of the low refractive index layers are within the ranges shown in Tables A-1 and A-2 below.
<Table A-1>
**Table 7-1**
| | | Optical thickness: nd | | | |
|---|---|---|---|---|---|
| | | 16-layer structure | 14-layer structure | 12-layer structure | 10-layer structure |
| Layer 1 on base material side | H (high refractive index layer) | 111.82 to 123.60 | 105.43 to 116.53 | 123.40 to 136.25 | 128.96 to 136.94 |
| 2 | L (low refractive index layer) | 114.59 to 126.65 | 108.44 to 119.86 | 110.62 to 122.14 | 113.29 to 120.29 |
| 3 | H (high refractive index layer) | 115.26 to 127.40 | 115.87 to 128.07 | 113.09 to 124.87 | 119.79 to 127.19 |
| 4 | L (low refractive index layer) | 116.34 to 128.58 | 117.71 to 130.11 | 116.46 to 128.59 | 118.50 to 125.84 |
| 5 | H (high refractive index layer) | 128.09 to 141.57 | 129.26 to 142.86 | 131.33 to 145.01 | 135.46 to 143.84 |
| 6 | L (low refractive index layer) | 130.23 to 143.93 | 131.48 to 145.32 | 134.30 to 148.29 | 127.26 to 135.14 |
| 7 | H (high refractive index layer) | 127.37 to 140.77 | 128.33 to 141.83 | 132.21 to 145.98 | 131.67 to 139.81 |
| 8 | L (low refractive index layer) | 129.11 to 142.71 | 130.67 to 144.43 | 125.57 to 138.65 | 116.89 to 124.12 |
| 9 | H (high refractive index layer) | 126.02 to 139.28 | 125.36 to 138.56 | 119.15 to 131.56 | 120.57 to 128.03 |
| 10 | L (low refractive index layer) | 129.05 to 142.63 | 119.71 to 132.31 | 109.65 to 121.07 | 261.98 to 278.18 |

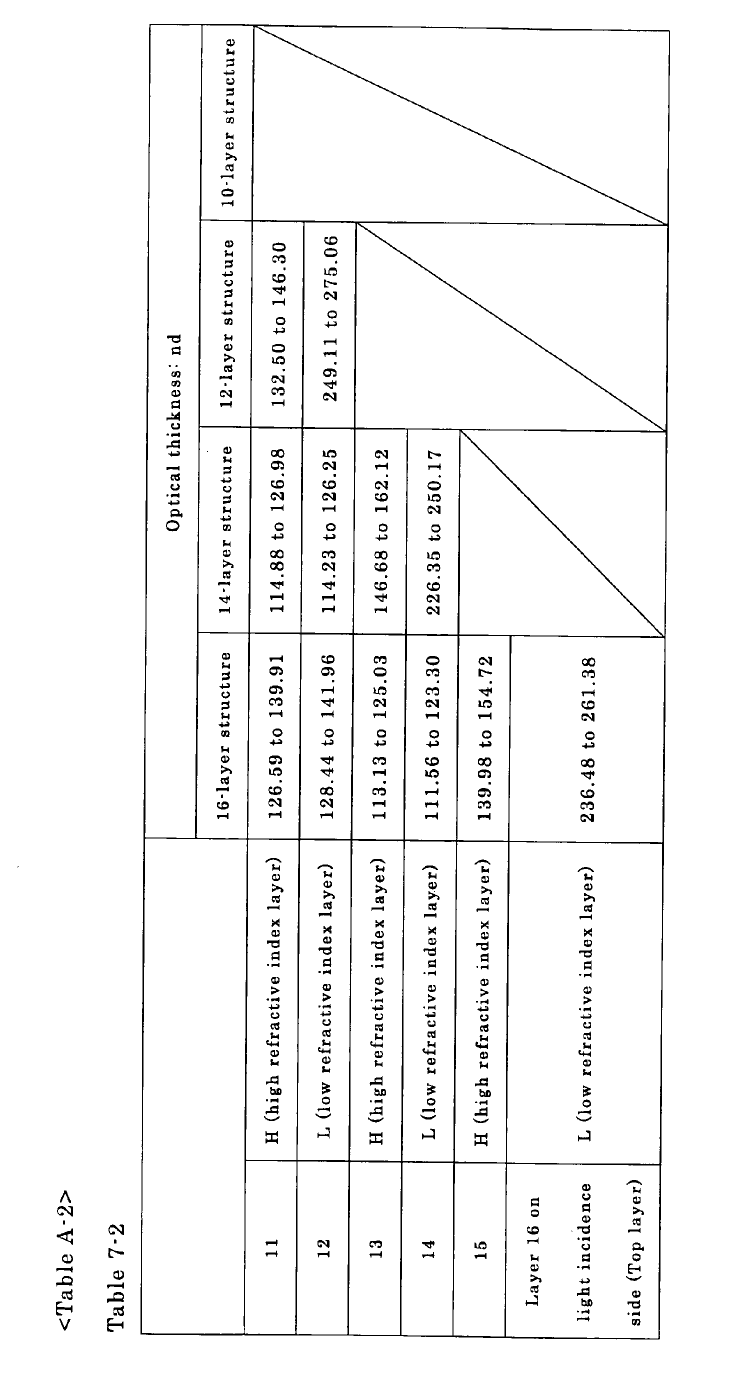

6. The filter for an optical recording medium according to any one of claims 1 to 5, wherein a material for the high refractive index layers is any one of TiO₂, Ta₂O₅ and Nb₂O₅.

7. The filter for an optical recording medium according to any one of claims 1 to 6, wherein a material for the low refractive index layers is one of SiO₂ and MgF₂.

8. The filter for an optical recording medium according to any one of claims 2 to 7, wherein the base material is a plastic sheet.

9. The filter for an optical recording medium according to any one of claims 1 to 8, wherein the filter transmits a light with a first wavelength but reflects a light with a second wavelength, which is different from the light with the first wavelength.

10. The filter for an optical recording medium according to claim 9, wherein the light with the first wavelength is 350nm or greater and less than 600nm in wavelength, and the light with the second wavelength is in the range of 600nm to 900nm in wavelength.

11. The filter for an optical recording medium according to any one of claims 1 to 10, wherein the filter has a light transmittance of 80% or more at a wavelength of 655nm and a light transmittance of 20% or less at a wavelength of 532nm, at incidence angles of 0° to 31°.

12. The filter for an optical recording medium according to any one of claims 1 to 11, wherein the filter is used as a selective reflection film of an optical recording medium which records information by means of holography.

13. The filter for an optical recording medium according to claim 12, wherein information light and reference light are applied as coaxial light flux to the optical recording medium, and the optical recording medium records information according to an interference pattern formed by interference between the information light and the reference light.

14. A method for producing a filter for an optical recording medium, comprising:
alternately depositing a plurality of high refractive index layers and a plurality of low refractive index layers over a substrate by physical vapor deposition (PVD) without heating the inside of a chamber.

15. The method for producing a filter for an optical recording medium according to claim 14, wherein the physical vapor deposition (PVD) is multi-chamber sputtering in which the layers are continuously deposited using a plurality of chambers.

16. The method for producing a filter for an optical recording medium according to any one of claims 14 and 15, wherein each of the high refractive index layers is deposited at a deposition rate of 1 to 1.5 (Å/s).

17. An optical recording medium comprising:
an upper substrate,
a lower substrate,
a recording layer which records information by means of holography and is situated on the lower substrate, and
a filter layer situated between the lower substrate and the recording layer,
wherein the filter layer is the filter for an optical recording medium according to any one of claims 1 to 13.

18. The optical recording medium according to claim 17, wherein the substrate is provided with a servo pit pattern.

19. The optical recording medium according to claim 18, wherein there is a reflective film on a surface of the servo pit pattern.

20. The optical recording medium according to claim 19, wherein a first gap layer for smoothing a surface of the lower substrate is provided between the filter layer and the reflective film.

21. The optical recording medium according to any one of claims 17 to 20, wherein a second gap layer is provided between the recording layer and the filter layer.

22. A recording method for an optical recording medium, comprising:
applying information light and reference light as coaxial light flux to the optical recording medium according to any one of claims 17 to 21, and
recording information in the recording layer according to an interference pattern formed by interference between the information light and the reference light.

23. A reproducing method for an optical recording medium, comprising:
reproducing information by applying reference light to an interference pattern recorded in a recording layer by the recording method according to claim 22.
